# EUROPÄISCHE PATENTSCHRIFT

(11) **EP 1 740 911 B1**
(45) Veröffentlichungstag und Bekanntmachung des Hinweises auf die Patenterteilung: **15.06.2011**
(21) Anmeldenummer: 05739468.6
(22) Anmeldetag: 19.04.2005
(51) Int. Cl.: G01D 11/24, G01D 5/48

(54) **FLACHPROFIL MIT BEFESTIGUNGSNUTEN**
FLAT PROFILE COMPRISING FASTENING GROOVES
PROFILE PLAT A RAINURES DE FIXATION

(30) Priorität: 19.04.2004 DE 202004006144 U
(43) Veröffentlichungstag der Anmeldung: 10.01.2007
(73) Patentinhaber: ASM AUTOMATION, SENSORIK, MESSTECHNIK GMBH, D-85452 Moosinning (DE)
(72) Erfinder: STEINICH, Klaus, Manfred, 85604 Zorneding (DE)
(74) Vertreter: Alber, Norbert
(86) Internationale Anmeldenummer: PCT/EP2005/004169
(87) Internationale Veröffentlichungsnummer: WO 2005/100927

(56) Entgegenhaltungen:
- GB-A- 1 071 549
- GB-A- 2 244 318
- US-A- 5 313 160
- US-A1- 2002 135 359

## Beschreibung

### I. Anwendungsgebiet

Die Erfindung betrifft eine magneto-striktive Wegmess-Vorrichtung.

### II. Technischer Hintergrund

Das Grundprinzip einer solchen Vorrichtung besteht darin, dass ein Wellenleiter aus einem sowohl elektrisch leitenden als auch magnetisierbarem Material in Messrichtung, der Längsrichtung der Vorrichtung, verläuft, insbesondere in leicht gespanntem Zustand.

Ein Magnet ist mit demjenigen Bauteil, dessen Position in Längsrichtung gemessen bzw. überwacht werden soll, verbunden und wird durch dieses Bauteil in Längsrichtung entlang des Wellenleiters berührungslos, jedoch in ausreichend geringem Abstand, bewegt.

Ein in den Wellenleiter eingegebener Stromimpuls bewirkt in Wechselwirkung mit dem Magneten eine mechanische Welle, die von der Position des Magneten aus den Wellenleiter entlang läuft und hinsichtlich ihrer Laufzeit von der Auswerteelektronik, die meist am einen Ende des Wellenleiters angeordnet ist, detektiert wird, woraus die Längsposition des Magneten und damit des zu überwachenden Bauteiles relativ zum Wellenleiter bekannt ist.

Da derartige Wegmess-Vorrichtungen häufig in Maschinen, auch in produzierenden Maschinen, eingesetzt werden, müssen sie eine Reihe von Forderungen erfüllen wie Schutz der Messvorrichtung gegen mechanische Beschädigung und Verschmutzung, insbesondere gegen Eindringen von Feuchtigkeit in die Auswerteelektronik, Beibehaltung des ursprünglichen Spannungszustandes des Wellenleiters, Abschirmung der elektromagnetischen Strahlung der Auswerteelektronik nach außen und innen, Montage- und Wartungsfreundlichkeit der Messvorrichtung.

Zum einen ist es diesbezüglich bereits bekannt, den Wellenleiter in einer stützenden, jedoch nicht zu stark dämpfenden Umhüllung aufzunehmen und in dieser Form als Wellenleiter-Einheit zu handhaben.

Zum anderen ist es bereits bekannt, den Wellenleiter bzw. die erwähnte Wellenleiter-Einheit geschützt im Inneren eines am Umfang geschlossenen hohlen Rohr-Profiles anzuordnen, welches kostengünstig als Strangpress-Profil herstellbar ist.

Für unterschiedliche Anwendungsfälle sind dabei unterschiedliche Formen des Schutzprofils notwendig, abhängig beispielsweise davon
- wie stabil das Schutzprofil gegen Biegungen in Querrichtung sein muss,
- ob der Magnet zur Beeinflussung des Longitudinalsensors formschlüssig oder frei entlang des Schutzprofiles geführt sein muss bzw. darf,
- das Schutzprofil seinerseits in einer insbesondere kreisrunden Innenkontur, insbesondere in einem weiteren Schutzrohr, aufnehmbar sein muss,
- wie viel Querschnittsraum zum Anbringen eines Schutzprofiles, insbesondere in welchen Relationen (Breite zu Höhe), hierfür vorhanden ist.

Die häufigste Randbedingung besteht dabei darin, dass für die Anordnung der Sensoreinheit und damit des Schutzprofiles nur eine sehr geringe Höhe vorhanden ist, häufig in einer Größenordnung von nur maximal 15 mm, während die verfügbare Breite deutlich größer ist.

Aus der US 2002/0135359 ist eine Sensoreinheit nach dem Oberbegriff des Anspruchs 1 bekannt.

GB-A-2244318 beschreibt darüber hinaus eine Mutter mit Kunststofferhebungen in ihrem Innenumfang zum Eingreifen des Außengewindes einer einzuschraubenden Schraube. Dass eine solche Mutter zur Verschraubung eines Abschlussdeckels bei einem Schutzprofil einer magnetostriktiven Sensoreinheit genutzt wird, ist dort jedoch nicht zu entnehmen.

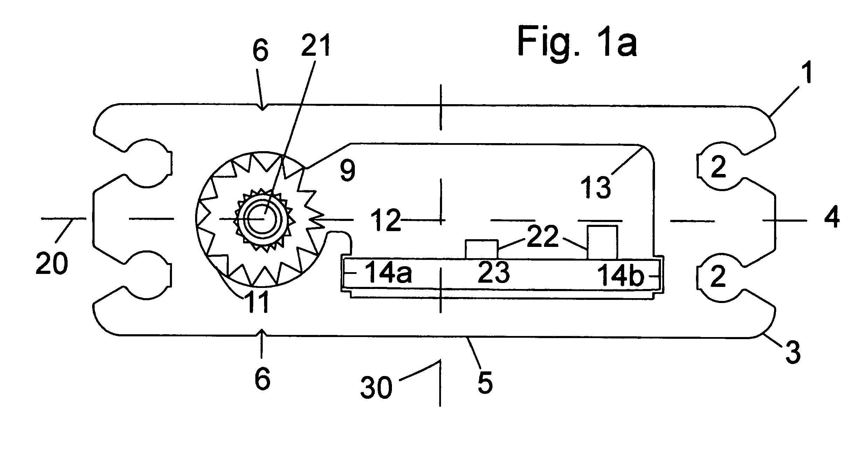

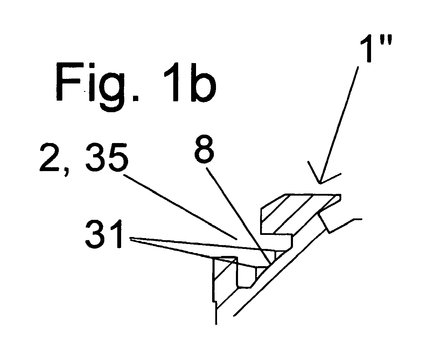

US-A-5313160 beschreibt darüber hinaus ein Schutzprofil für einen magnetostriktiven Sensor, bei dem die Abschlussdeckel durch Verschraubungen in Längsrichtung am Schutzprofil befestigt sind, wie dort in Fig. 1 ersichtlich. Es ist jedoch nicht beschrieben, diese Verschraubung mittels selbstschneidender Schrauben in Kombinuten hinein zu realisieren, obwohl selbstschneidende Schrauben an sich natürlich bekannt sind, wie beispielsweise aus GB 1071549 ersichtlich.

### III. Darstellung der Erfindung

### a) Aufgabe

Es ist daher die Aufgabe gemäß der Erfindung, ein Schutzprofil bzw. eine Schutzprofil-Familie zu schaffen, die die häufigsten Randbedingungen und Einbausituationen erfüllt bzw. eine ein solches Schutzprofil umfassende Sensoreinheit.

### b) Lösung

Diese Aufgabe wird durch die Merkmale des Anspruchs 1 gelöst. Vorteilhafte Ausführungsformen ergeben sich aus den Unteransprüchen.

Durch die Anordnung von Kombinuten in der Außenkontur des Querschnitts des Schutzprofiles werden unterschiedliche Aufgaben gleichzeitig erfüllt:

Dadurch, dass in die Kombinuten in Querrichtung plattenförmige Elemente eingeschoben werden können, kann an jeder beliebigen Stelle der Längserstreckung des Schutzprofiles dieses mittels Spannpratzen, die mit ihrem plattenförmigen Abschnitt in die Kombinuten eingreifen, an einem aufnehmenden Bauteil befestigt werden, unter Umständen auch mit unterschiedlichen Abständen der Verschraubung zu dem Schutzprofil.

Dadurch, dass in diese Kombinuten in Längsrichtung von der Stirnseite her Schrauben selbstschneidend einschraubbar sind, können die gleichen Kombinuten zum Aufschrauben von z. B. stumpf aufgesetzten Abschlussdeckeln auf die Stirnseiten des Schutzprofiles verwendet werden, wodurch eine sehr einfache und kostengünstige Möglichkeit zum Abdichten des inneren Freiraumes des Schutzprofiles - z. B. mittels zwischengelegter Flachdichtung - erreicht wird, insbesondere wenn einer der Abschlussdeckel eine Kabeldurchführung zum Anschluss der Auswerteelektronik im Inneren des Schutzprofiles aufweist. Insbesondere steht in diesem Fall kein Element über die Außenkontur des Schutzprofiles seitlich vor.

Die Innenkontur des Schutzprofiles weist in einer ersten bevorzugten Ausführungsform nur einen einzigen ersten Hauptraum zur Aufnahme des Wellenleiters und einen zweiten Hauptraum zur Aufnahme der Auswerteelektronik, insbesondere in Form von einer oder mehreren Platinen, auf, wobei erster und zweiter Hauptraum über eine Engstelle miteinander verbunden sind, was dem Schutzprofil zusätzliche Stabilität bietet.

Der erste Hauptraum weist dabei über mehr als 200°, insbesondere mehr als 250°, insbesondere mehr als 270°, einen kreisbogenförmigen Innenumfang auf, so dass ein Wellenleiter samt der ihn tragenden Wellenleiter-Lagerung, die in der Regel ebenfalls einen kreisbogenförmigen Außenumfang besitzt, darin in Längsrichtung einschiebbar ist und formschlüssig in Querrichtung gehalten wird.

Eine Einkerbung am Außenumfang des Schutzprofiles kennzeichnet dabei die Mitte des ersten Hauptraumes für das Positionieren des Magneten.

Der zweite Hauptraum weist vorzugsweise wenigstens ein Paar von einander gegenüber liegenden Haltenuten zum Aufnehmen von einer entsprechend breiten Platine auf, die insbesondere auch als Kombinuten ausgebildet sein können.

Die Engstelle zwischen erstem und zweitem Hauptraum ist dabei insbesondere exzentrisch zur Mittenebene aus erstem und zweitem Hauptraum angeordnet.

Die Außenkontur des Profiles ist vorzugsweise wenigstens dreimal so breit wie hoch, wobei die Kombinuten paarweise jeweils vorzugsweise nur in den Schmalseiten angeordnet sind, und zwar mit übereinstimmenden Abständen zu den jeweiligen Breitseiten hin. In einer anderen Ausführungsform können die Kombinuten auch unmittelbar im Eckbereich zwischen Breitseiten und Schmalseiten der Außenkontur angeordnet werden, so dass plattenförmige Elemente dann sowohl parallel zur Schmalseite als auch parallel zur Breitseite liegend in die Kombinuten eingesetzt werden können.

Neben einer rechteckigen bzw. flach-rechteckigen Außenkontur kann die Außenkontur auch auf der Mitte der einen Breitseite eine Aufwölbung mit einer über mehr als 180° (von der Außenkontur her) kreisbogenförmigen Gestalt aufweisen mit einem Hohlraum, insbesondere in Form des ersten Hauptraumes, im Inneren, so dass sich dann eine mittensymmetrisch zu einer Querrichtung ergebende Querschnittsform des Schutzprofiles, hinsichtlich insbesondere sowohl der Außenkontur als auch der Innenkontur, ergibt.

Die Aufwölbung kann dabei so dimensioniert sein, dass die Außenkontur des Profilquerschnitts in einen Hüllkreis passt und diesen nur mit drei Kontaktpunkten erreicht.

Auf eine solche Aufwölbung kann ein die kreisbogenförmige Außenkontur der Aufwölbung über mehr als 180° formschlüssig umgreifendes und damit in Querrichtung formschlüssig gehaltenes Gleitelement, insbesondere ein Standard-Gleitführungselement, geführt werden, welches auch einen Magneten enthält, der als Signal gebendes Element der Sensoreinheit benötigt wird.

Die Sensoreinheit, die mit den beschriebenen Abschlussdeckeln stirnseitig verschlossen und darüber auch mittels hindurch geführter Kabel mit der Umgebung und daher Stromversorgung verbunden wird, wird mittels Spannpratzen und diese durchdringenden Schrauben an einem Bauteil der Umgebung befestigt, wobei ein isolierendes Isolierelement z. B. aus Kunststoff sowohl zwischen den Spannpratzen und dem angrenzenden Bauteil und/oder auch zwischen den Spannpratzen und den diese durchdringenden, fixierenden Schrauben vorhanden ist.

Die Kombinuten selbst weisen eine Innenkontur auf, die wenigstens teilweise kreisbogenförmig ist oder Aufwölbungen aufweist, die über eine kreisbogenförmige theoretische Innenkontur nach innen ragen. Insbesondere besitzen die Kombinuten eine im Wesentlichen sich über mehr als 250° erstreckende kreisbogenförmige Innenkontur, deren offene Seite sich konusförmig nach außen erweitert.

Kombinuten, die im Eckbereich der Außenkontur angeordnet sind, besitzen einen im wesentlichen dreieckigen Innenraum, der von sich gegenseitig nicht vollständig erreichenden, parallel zu den angrenzenden Seitenflächen verlaufenden Fortsätzen gebildet wird, wobei vorzugsweise von der Bodenfläche des etwa dreieckigen Innenraumes parallel zu dessen Mitte zwei Erhebungen aufragen, die zum Einschneiden der Gewindegänge von in die Kombinut eingeschraubten Schrauben dienen, ohne dass hierdurch der Gesamtquerschnitt der Kombinut verformt wird.

### c) Ausführungsbeispiele

Ausführungsformen gemäß der Erfindung sind im Folgenden beispielhaft näher beschrieben. Es zeigen:
- Fig. 1:: eine erste und zweite Bauform im Querschnitt,
- Fig. 2:: die Abschlussdeckel und zugehörige Flachdichtung in perspektivischer Ansicht,
- Fig. 3:: eine dritte Bauform des Schutzprofiles, und
- Fig. 4:: eine mit dem Schutzprofil gemäß der ersten Bauform fertig gestellte Sen- soreinheit einschließlich deren Befestigung an einem umgebenden Bau- teil.

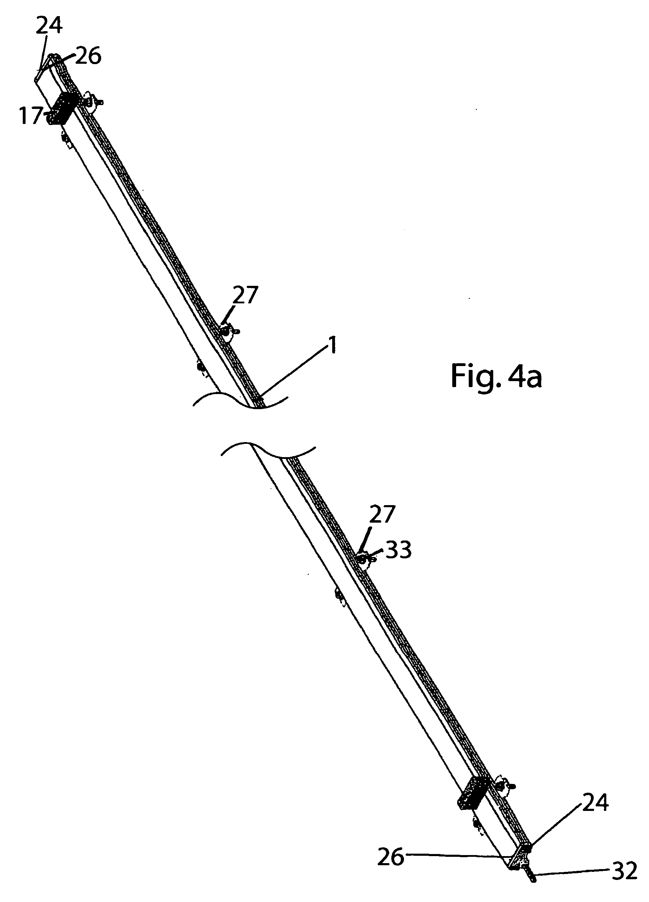

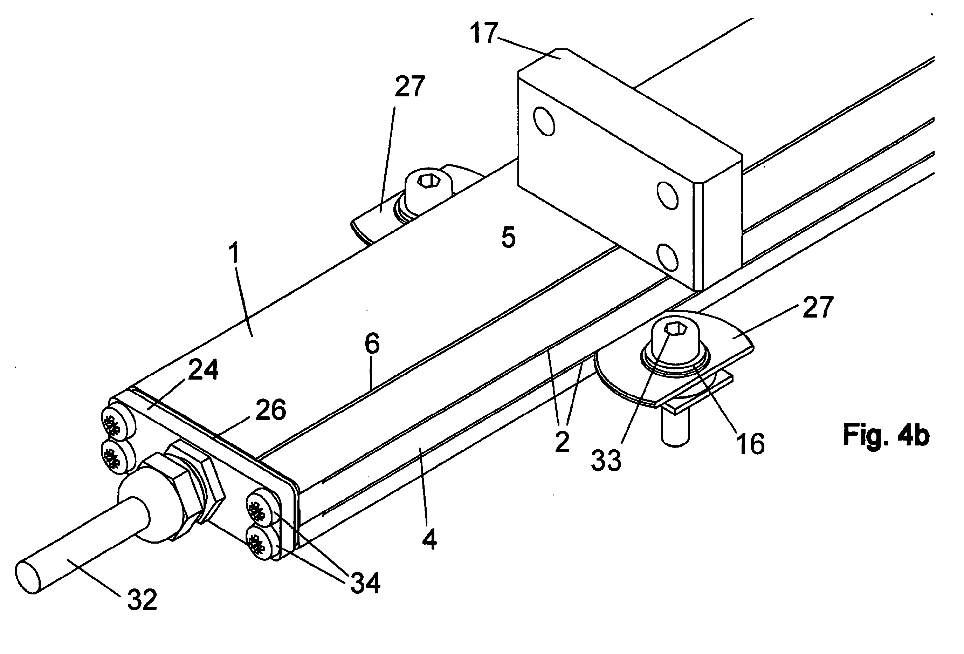

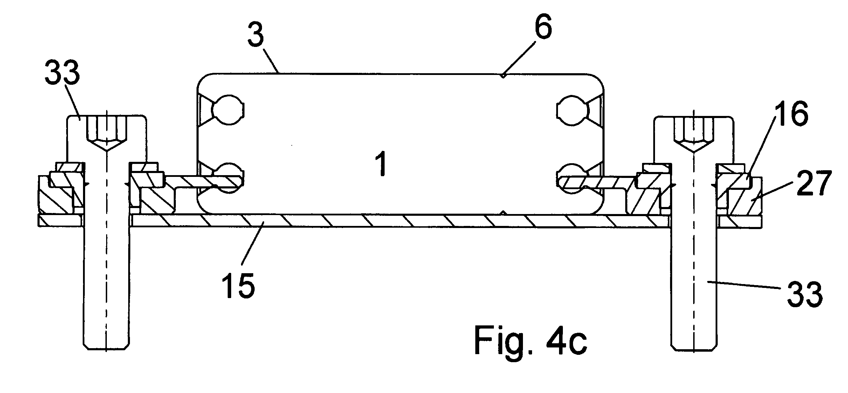

Fig. 1 a zeigt den Querschnitt einer ersten Ausführungsform eines Schutzprofiles 1, welches sich mit diesem Querschnitt in Längsrichtung 10 erstreckt, wie beispielsweise in den Fig. 4 dargestellt.

Während die Außenkontur 3 etwa der eines Rechtecks mit abgerundeten Ecken entspricht, mit einem Verhältnis von Breite zu Höhe von etwa 3:1 und Absolutabmessungen von etwa 12 auf 16 mm, und diese Außenkontur auch mittensymmetrisch zu der ersten Querrichtung 20 parallel zu den Breitseiten 5 ausgebildet ist, ist die vollständig geschlossene Innenkontur 13 unsymmetrisch ausgebildet:

In der Breite nebeneinander sind einerseits ein erster Hauptraum 11 und andererseits ein zweiter Hauptraum 12 ausgebildet, die über eine Engstelle 9 miteinander in Verbindung stehen und einen einzigen gemeinsamen inneren, vollständig vom Schutzprofil 1 umschlossenen, und damit umfänglich geschlossenen Freiraum bilden.

Der erste Hauptraum 11 ist dabei eine Kreisbogenkontur über mehr als 270°, die sich exzentrisch zur ersten Querrichtung 20 versetzt zur Engstelle 9 hin öffnet. Der erste Hauptraum 11 ist so dimensioniert, dass er zur Aufnahme eines in einer Wellenlagerung aufgenommenen Wellenleiters 21 geeignet ist, der - umgeben von einem elastischen Schlauch - stirnseitig in den ersten Hauptraum 11 eingezogen werden kann, und dadurch in Querrichtung formschlüssig darin gehalten wird.

Wie in Fig. 1b dargestellt, können die Kombinuten 2 jedoch auch im Eckbereich des Profils 1 angeordnet sein, und insbesondere als Ecknuten 35 direkt in der Ecke des Profiles angeordnet sein, so dass sich die Öffnung der Nut genau in der Außenecke des Profiles befindet.

Dann kann auch eine andere Querschnittsform dieser Ecknuten 35 empfehlenswert sein, wie in Fig. 1b dargestellt, nämlich eine etwa dreieckige Grundform, bei der sich jeweils zwei der drei Seitenflächen des Dreiecks parallel zu einer der Außenflächen des Profiles 1 erstrecken.

Damit trotz der dreieckigen Grundform eine zuverlässige Einschraubung von Befestigungsschrauben 34 in Längsrichtung 10 erfolgen kann, sind auf dem Boden 8 der Nut, also insbesondere dem dritten Schenkel bei einer dreieckigen Grundform, ein oder mehrere, vorzugsweise zwei, gratförmige Erhebungen ausgebildet, die dem Einschneiden der Gewinde einer Befestigungsschraube 34 dienen bzw. diese erleichtern.

Der zweite Hauptraum 12 ist im Wesentlichen rechteckig gestaltet mit seiner größeren Längserstreckung parallel zu der Breitseite 5 der Außenkontur 3. In den Schmalseiten des zweiten Hauptraumes 12 sind einander gegenüberliegend zwei Haltenuten 14a, b nahe der einen Breitseite des zweiten Innenraumes 12 und gegenüberliegend von der Engstelle 9 angeordnet, die zum Einschieben einer nicht dargestellten Platine 23 dienen, auf welcher die Auswerteelektronik 22 angeordnet sein kann, welche dann über elektrische Leiter, die durch die Engstelle 9 hindurch verlaufen, mit dem Sensorkopf, der stirnseitig auf dem Wellenleiter angeordnet sein kann und sich damit innerhalb des ersten Hauptraumes 11 befindet, verbunden sind.

Erster und zweiter Hauptraum 11, 12 sind von den Schmalseiten 4 der Außenkontur soweit nach innen zurückversetzt, so dass in den Schmalseiten 4 - jeweils von den Breitseiten 5 gleich weit beabstandet und damit symmetrisch zur ersten Querrichtung 20, nebeneinander zwei hinterschnittene Kombinuten 2 angeordnet sein können.

Die Kombinuten 2 dienen einerseits dem Einschieben von plattenförmigen Elementen, beispielsweise den in Fig. 5 ersichtlichen Spannpratzen 27, in Querrichtung, mittels derer eine Verschraubung gegenüber einem tragenden Bauteil möglich ist, und andererseits dem Einschrauben von selbstschneidenden Schrauben 34 von der Stirnseite her in Längsrichtung 10, also der Blickrichtung der Fig. 1, um die stirnseitigen Abschlussdeckel 24, 24' stumpf auf die Stirnseiten des Schutzprofiles 1 aufzusetzen und dort sicher zu verschrauben.

Diese Kombinuten sind z. B. von ihrer Gestaltung vasenförmig gestaltet, mit einem hinterschnittenen, kreissegmentförmigen unteren Bereich mit ebener Bodenfläche, dessen offene Oberseite in einen sich V-förmig erweiternden Hals, der zur Schmalseite 4 hin offen ist, übergeht.

Die Gewindegänge 34 der Befestigungsschrauben schneiden sich dabei in den hinterschnittenen, kreisbogenförmigen Teil der Kombinuten 2 des Schutzprofiles 1 selbsttätig ein, da die Schrauben in der Regel aus Stahl, das Schutzprofil 1 dagegen in der Regel aus Aluminium besteht.

Ein solcher Schlauch aus einem gummiartigen Material, beispielsweise Silikon, wird während des Einziehens in Längsrichtung stark gedehnt, und verringert dadurch seinen Außenumfang, der im nicht gedehnten Zustand größer ist als der Innendurchmesser des ersten Hauptraumes 11. Durch diese Verdünnung kann der Schlauch zusammen mit dem darin befindlichen Wellenleiter ohne größere Reibung in den ersten Hauptraum 11 eingezogen werden. Nach dem Loslassen des Schlauches dient sich dieser in Querrichtung aus und liegt mit seinem Außenumfang unter Vorspannung an dem Innenumfang des Hauptraumes 11 an, und in gleicher Weise mit seinem Innenumfang am Wellenleiter bzw. dem den Wellenleiter umgebenden, rohrförmigen Rückleiter bzw. der Wellenleiterlagerung.

Zu diesem Zweck ist der Schlauch vorzugsweise an seiner Außenseite und/oder seiner Innenseite im Querschnitt gewellt oder gezackt ausgebildet.

Auf der Höhe der Mitte des ersten Hauptraumes 1 ist zur Lagemarkierung des Wellenleiters auf den Breitseiten 5 der Außenkontur 3 zusätzlich auf jeder Seite jeweils eine Einkerbung 6 vorgesehen, die damit eine nicht entfernbare Markierung darstellt.

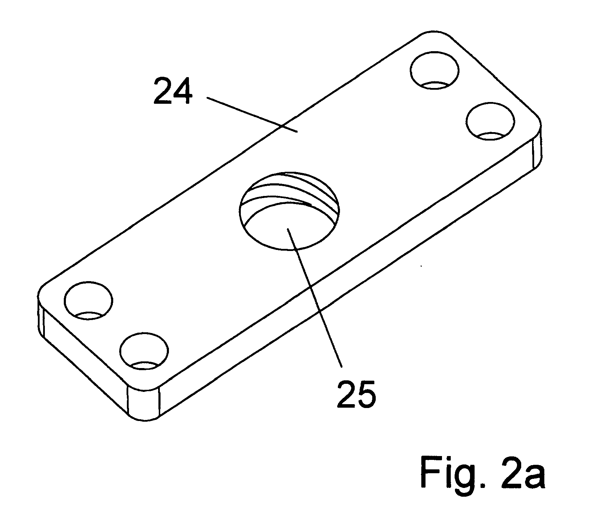

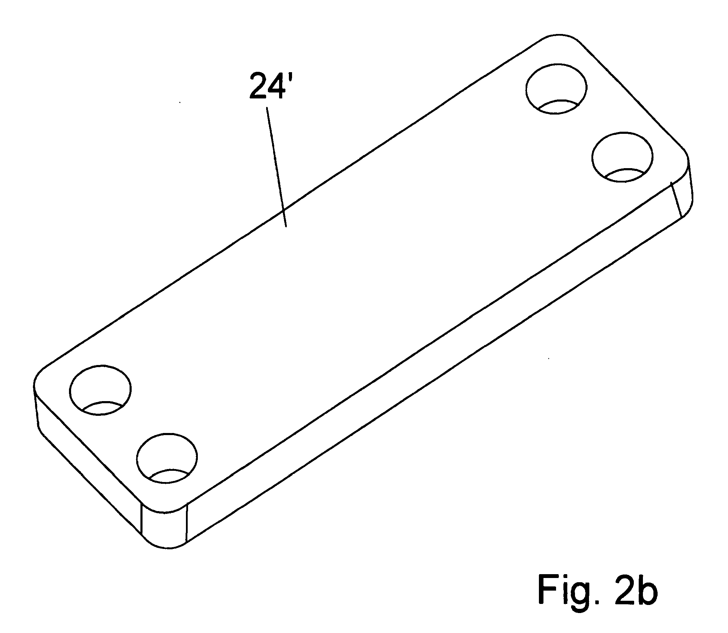

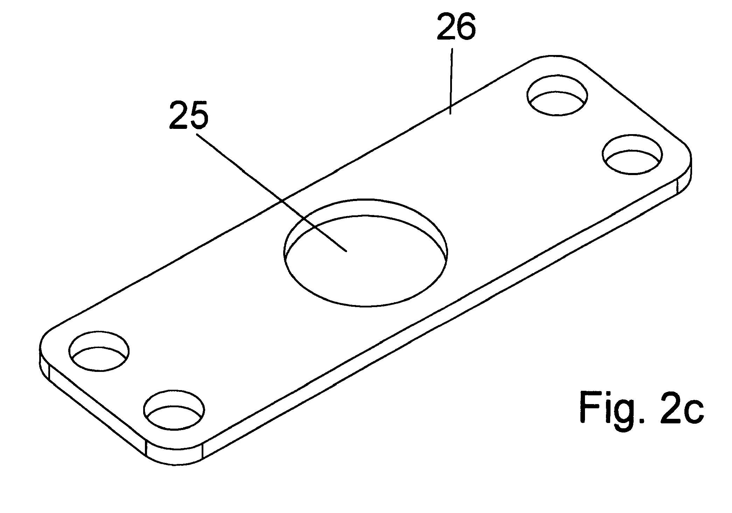

Von den Abschlussdeckeln 24, 24' sind in den Fig. 2a und 2b jeweils eine perspektivisch dargestellt. Diese besitzen eine ausreichende Dicke, um Verwindungen zu vermeiden, und eine zwischen dem Abschlussdeckel 24, 24' und der Stirnseite des Schutzprofiles 1 eingelegte entsprechende Flachdichtung 26 sicher in fester Anlage aufzunehmen.

Die Abschlussdeckel 24, 24' besitzen eine rechteckige Außenkontur entsprechend den Abmessungen der Außenkontur 3 des Schutzprofiles 1, jedoch ohne deren Kombinuten 2 und auch ohne die Einkerbung 6. In den Eckbereichen, nämlich an der Position der Kombinuten 2, sind insgesamt 4 Durchgangsöffnungen zum Hindurchführen der Befestigungsschrauben vorhanden. Zusätzlich ist bei dem einen Abschlussdeckel 24 mittig ein Kabeldurchlass 25, gegebenenfalls mit einer einstückig angeformten Kabeltülle und/oder mit einem Innengewinde, in welches die Außenisolierung des Kabels einschraubbar ist, vorhanden, um das Kabel ins Innere des Schutzprofiles 1 zu führen und mit der Auswerteelektronik 22 zu verbinden.

Die Flachdichtungen 26 besitzen vorzugsweise die Grundform ebenfalls dieses Abschlussdeckels 24 hinsichtlich der Außenkontur und Innenkontur, also einschließlich des zentralen Kabeldurchlasses 25, der hier jedoch als einfache Durchgangsöffnung ohne Innengewinde und Tülle ausgebildet ist. Die Flachdichtung 26 besteht aus üblichem, flexiblem, elastischem Dichtungsmaterial.

Der Vorteil dieser Bauform des Schutzprofiles 1 zeigt eine fertiggestellte Sensoreinheit gemäß Fig. 4a:

Je nach gewünschter Messlänge der Sensoreinheit wird ein entsprechendes Stück des Schutzprofiles 1 abgelängt, und in den ersten Hauptraum 11 und zweiten Hauptraum 12 der Wellenleiter samt Wellenleiterlagerung einerseits sowie eine Elektronikplatine 23 mit der Auswerteelektronik 22 andererseits eingeschoben, die über biegsame elektrische Leitungen miteinander in Verbindung stehen.

Das umfänglich geschlossene Schutzprofil 1 wird anschließend stirnseitig mittels der Abschlussdeckel 24, 24' unter Zwischenlegung der Flachdichtungen 26 verschlossen, wobei vorher durch den einen Abschlussdeckel 24 das Anschlusskabel 32 hindurchgeführt und im Inneren des Schutzprofiles 1 mit der Auswerteelektronik 23 verbunden wird.

Diese Sensoreinheit wird auf einem nicht dargestellten tragenden Bauteil an jeder beliebigen Längsposition befestigt entweder durch Verkleben einer der Breitseiten 5 mit diesem Bauteil oder Auflegen mittels der Breitseite und Verschrauben mit Hilfe von Spannpratzen 27, die mit ihrem Randbereich in Querrichtung von außen in die Kombinuten 2 an der gewünschten Stelle eingeschoben und mittels die Spannpratzen 27 durchdringenden Fixierschrauben 33 gegenüber dem tragenden Bauteil verschraubt werden, wie besser anhand der Schnittdarstellung der Fig. 4c und der vergrößerten Detaildarstellung der Fig. 4b ersichtlich.

Im Abstand entlang einer so fixierten Sensoreinheit kann nunmehr der das Signal auslösende Magnet 17 berührungslos entlang der vom tragenden Bauteil abgewandten Breitseite 5 geführt werden, am besten möglichst genau entlang der Einkerbung 6, die die Lage des Wellenleiters im Inneren des Schutzprofiles 1 markiert, um ein optimales Signal zu erhalten.

Fig. 5c zeigt bei der Verschraubung des Schutzprofiles 1 gegenüber dem Untergrund, dass die Spannpratzen in diesem Fall direkt auf dem tragenden Bauteil aufliegen, jedoch zwischen der sie durchdringenden Fixierschraube 33 und der Spannpratze 27 eine Isolierhülse 16 angeordnet ist. Zusätzlich kann auch ein isolierendes Isolierelement 15 zwischen der Spannpratze 27 und dem tragenden Bauteil angeordnet sein, wie in der linken Bildhälfte der Fig. 4c dargestellt, um das aus elektrisch leitendem Material, beispielsweise Aluminium, bestehende Schutzprofil 1 elektrisch von dem es tragenden Bauteil zu entkoppeln, was natürlich nur dann Sinn macht, wenn dieses Isolierelement 15 sich auch unter dem gesamten Schutzprofil 1 hindurch erstreckt, und dessen direkte Berührung mit dem tragenden Bauteil vermieden wird.

Auf diese Art und Weise kann aus einem quasi endlos herzustellenden Profil als Schutzprofil lediglich über Ablängen schnell, einfach und kostengünstig eine fertige Sensoreinheit hergestellt und auch an in weiten Bereichen frei wählbaren Fixierungspunkten verschraubt werden, da über die Auskragung der Spannpratzen 27 auch der seitliche Abstand der Verschraubungspunkte gegenüber dem Rand des Schutzprofiles variiert werden kann.

Um für eine Montage oder Demontage des Schutzprofiles vom tragenden Bauteil die Fixierschrauben 33 nicht vollständig herausdrehen zu müssen, sind die Spannpratzen 27 in der Aufsicht betrachtet nicht als runde Beilagscheiben gestaltet, sondern hiervon ein Abschnitt entfernt, so dass durch Lockerung der Schrauben und Drehung der Spannpratze 27 (siehe Fig. 4b), bis die gerade Außenkante des entfernten Kreisabschnittes parallel zur Außenkante des Schutzprofiles 1 liegt, die Spannpratze 27 nicht mehr in die Kombinuten 2 eingreift und damit das Schutzprofil 1 vom Untergrund abgehoben werden kann. Derselbe Zweck wird erreicht, wenn die Bohrung für die Schraube in der als Spannpratze dienenden Beilagscheibe exzentrisch liegt.

Ein weiterer Vorteil dieses Schutzprofiles 1 besteht darin, dass zur Unterbringung von Wellenleiter und Elektronikplatine in den Endbereichen des Schutzprofiles 1 beim Herstellen der Sensoreinheit an der Innenkontur 13 keine Nachbearbeitungen wie Ausfräsen etc. mehr notwendig sind zusätzlich zum Ablängen des Schutzprofiles 1.

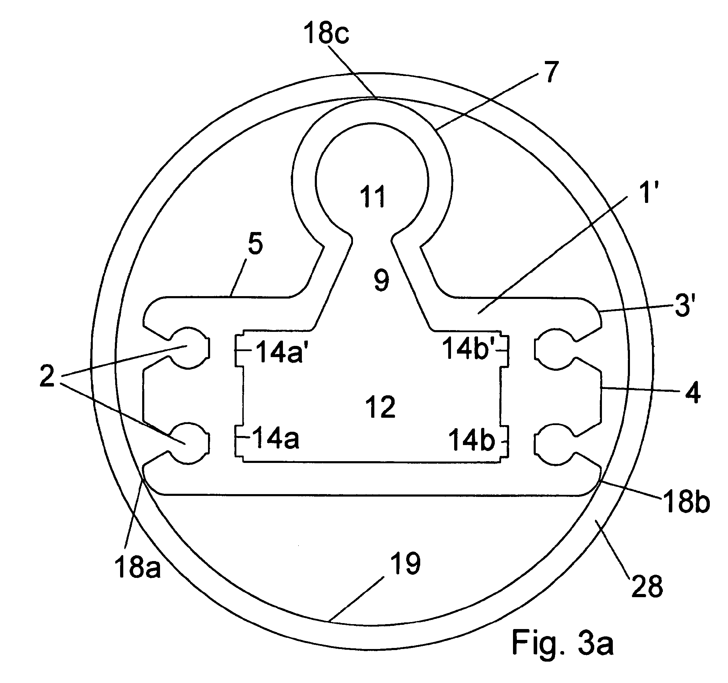

Fig. 3a zeigt eine zweite Bauform eines Schutzprofiles 1.

Die rechteckige Außenkontur 3' des Querschnittsprofils ist dabei ergänzt um eine Aufwölbung 7 auf einer der beiden Breitseiten 5.

Die Aufwölbung 7 ist pilzförmig, weist also einen verbreiterten Kopfbereich in Form eines Kreisbogensegmentes auf, welches in Form eines schlankeren, sich zum rechteckigen Teil des Schutzprofiles 1' hin erweiternden, Halsbereiches in dessen breite Seite übergeht.

Der rechteckige Teil des Schutzprofiles 1 ist weniger breit im Vergleich zur Höhe, aber immer noch mindestens doppelt so breit wie hoch, und in den Schmalseiten 4 sind wiederum die Kombinuten 2 angeordnet wie anhand der ersten Ausführungsform dargestellt.

Die Außenkontur 3' ist dabei so gestaltet und dimensioniert, dass sie in einem Hüllkreis, beispielsweise der Innenkontur eines runden Schutzrohres 28, Platz findet, und dieses nur an drei Stellen, nämlich dem höchsten Punkt der Aufwölbung 7 sowie den beiden unteren Eckkanten des rechteckigen Teiles des Schutzprofiles 1', berührt.

Diese Bauform des Schutzprofiles 1' dient zum Einschieben in Hohlräume mit kreisringförmiger Innenkontur eines aufnehmenden Bauteiles, oder auch zum Einschieben in das dargestellte zusätzliche Schutzrohr 28 für besonders rauhe Anwendungsfälle.

Die Innenkontur 13 des Schutzprofiles 1' besteht wiederum aus einem ersten Hauptraum 11 und einem zweiten Hauptraum 12, die für sich betrachtet von Dimensionierung, Form und Zweck denjenigen der ersten Bauform entsprechen. Jedoch ist in diesem Fall der erste Hauptraum 11 im Inneren des verdickten Kopfteiles der Aufwölbung 7 angeordnet, und im rechteckigen Hauptteil des Schutzprofiles 1' ausschließlich der zweite Hauptraum 12, während die Engstelle 9 die Verbindung, untergebracht im Halsbereich, ist.

Als weiterer Unterschied zur ersten Bauform sind in diesem Fall in den Schmalseiten des zweiten Hauptraumes 12 nahe dessen Breitseiten zwei Paare von Haltenuten 14ab, 14a', 14b' angeordnet, so dass je zwei Platinen übereinander eingeschoben werden könnten.

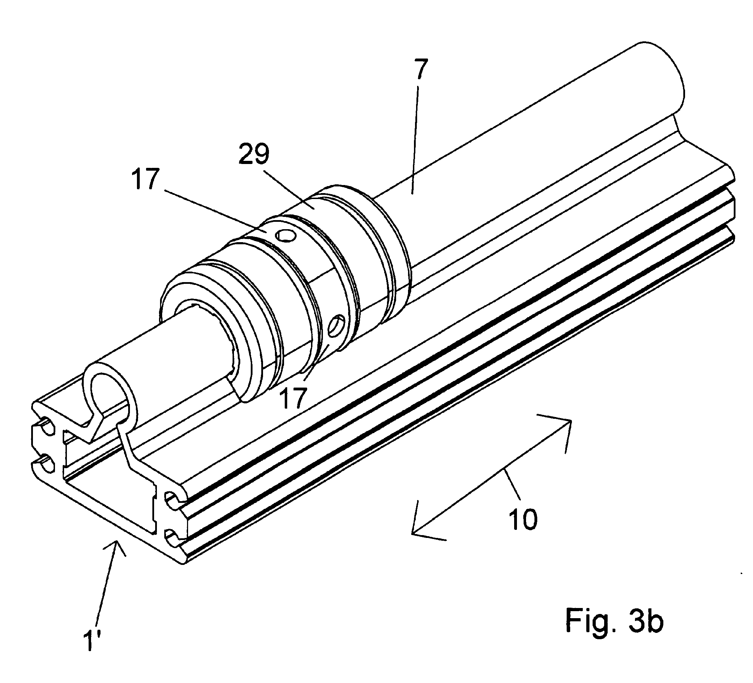

Fig. 3b zeigt das Schutzprofil 1' der Fig. 3a mit zusätzlich auf die Aufwölbung 7 von außen stirnseitig aufgeschobenem und auf diesem formschlüssig in Querrichtung gehaltenem Gleitführungselement 29, wie es standardmäßig ausgestattet mit Gleitführungen, erhältlich ist, und welches einen Magneten 17 als das Signal auslösende Element enthält.

Durch Verschieben des die Aufwölbung 7 soweit als möglich umgreifenden Gleitführungselementes 29 wird dessen Magnet 17 entlang des in der Aufwölbung 7 zentral untergebrachten Wellenleiters in der immer gleichen Querposition hierzu sicher geführt und ergibt ein optimales Signal.

### BEZUGSZEICHENLISTE

- 1: Schutzprofil
- 2: Kombinut
- 3: Außenkontur
- 4: Schmalseite
- 5: Breitseite
- 6: Eingrabung
- 7: Aufwölbung
- 8: Bodenfläche
- 9: Engstelle
- 10: Längsrichtung
- 11: Erste Hauptraum
- 12: Zweite Hauptraum
- 13: Innenkontur
- 14: Haltenut
- 15: Isolierelement
- 16: Isolierhülse
- 17: Magnet
- 18: Kontaktpunkt
- 19: Hüllkreis
- 20: Querrichtung
- 21: Wellenleiter
- 22: Auswertelektronik
- 23: Elektronikplatine
- 24: Abschlussdeckel
- 25: Kabeldurchlass
- 26: Flachdichtung
- 27: Spannpratze
- 28: Schutzrohr
- 29: Gleitführungselement
- 30: Querrichtung
- 31: Erhebung
- 32: Anschlusskabel
- 33: Befestigungsschraube
- 34: Schraube für Deckel
- 35: Ecknut

## Patentansprüche

1. Sensoreinheit mit
- einem Sensor-Schutzprofil (1) mit einem umlaufend geschlossenen Querschnitt,
- einem darin aufgenommenen magnetostriven Positionssensor und
- einer insbesondere darin aufgenommenen Auswerteelektronik (22) und
- zwei stirnseitigen Abschlussdeckeln (24) auf dem abgelängten Schutzprofil (1), wovon einer einen Kabeldurchlass (25) aufweist,
- einem in Längsrichtung (10) des Schutzprofils (1) entlang bewegbaren Magneten (17), und
- die Sensoreinheit Spannpratzen (27) zum Befestigen des Schutzprofils (1) an einem benachbarten Bauteil durch Eingreifen der Spannpratzen (27) in Querrichtung (20) in die Kombinuten (2) umfasst und
**dadurch gekennzeichnet, dass**
- Flachdichtungen (26) zwischen den Abschlussdeckeln (24) und den Stirnseiten des Schutzprofils (1), und
- der Abschlussdeckel (24) durch Verschraubungen in Längsrichtung in die Kombinuten (2) hinein am Schutzprofil (1) befestigt sind.

2. Sensoreinheit nach Anspruch 1,
**dadurch gekennzeichnet, dass**
- das Schutzprofil (1) in einem insbesondere kreisrunden Schutzrohr (28) passend aufgenommen und eingeschoben ist, und/oder insbesondere
- auf der Außenseite der kreisbogenförmigen Aufwölbung (7) formschlüssig umgreifend ein einen Magneten (17) enthaltendes Gleitelement, insbesondere ein Standard-Gleitführungselement (29), geführt ist.

3. Sensoreinheit nach einem der Ansprüche 1 bis 2,
**dadurch gekennzeichnet, dass**
zwischen den Spannpratzen (27) und dem angrenzenden Bauteil ein isolierendes Isolierelement (15), insbesondere aus Kunststoff, angeordnet ist sowie zwischen den Spannpratzen (27) und der diese durchdringenden Schraube eine Isolierhülse (16), insbesondere aus Kunststoff, angeordnet ist.

4. Sensoreinheit mit einem Sensor-Schutzprofil (1) nach einem der vorhergehenden Ansprüche
**dadurch gekennzeichnet, dass**
im Schutzprofil (1, 1') Kombinuten (2) mit einem hinterschnittenen, nach außen offenen Querschnitt zum einerseits seitlichen Einschieben von plattenförmigen Elementen und andererseits Einschrauben von selbstschneidenden Schrauben in den hinterschnittenen, kreisbogenförmigen Teil des Querschnittes der Kombinuten in Längsrichtung (10) von der Stirnseite her in der Außenkontur (3) des Profilquerschnitts angeordnet sind.

5. Sensoreinheit mit einem Sensor-Schutzprofil (1) nach einem der vorhergehenden Ansprüche
**dadurch gekennzeichnet, dass**
im Schutzprofil (1, 1') die Innenkontur (13) nur aus einem ersten Hauptraum (11) für den Wellenleiter (21) des Positionssensors und nur einem zweiten Hauptraum (12) für die Auswerteelektronik (22) besteht, die vorzugsweise über eine Engstelle (9) der Innenkontur (13) miteinander in Verbindung stehen, so dass das Schutzprofil (1, 1') im Querschnitt insbesondere nur über einen einzigen Freiraum verfügt.

6. Sensoreinheit mit einem Sensor-Schutzprofil (1) nach einem der vorhergehenden Ansprüche
**dadurch gekennzeichnet, dass**
bei dem Schutzprofil (1, 1')
- die Außenkontur (3) des Querschnitts des Schutzprofils mindestens drei Mal so breit wie hoch ist und insbesondere nur in den Schmalseiten (4) jeweils eine, vorzugsweise jeweils zwei, jeweils von den angrenzenden Breitseiten (5) gleich weit beabstandete, Kombinuten (2) aufweist, und/oder insbesondere
- entlang der Breitseiten (5) am Außenumfang eine Einkerbung (6), insbesondere an der Stelle der Mitte des ersten Freiraumes (11) für den Wellenleiter (21), vorhanden ist.

7. Sensoreinheit mit einem Sensor-Schutzprofil (1) nach einem der vorhergehenden Ansprüche
**dadurch gekennzeichnet, dass**
im Schutzprofil (1, 1') die Kombinuten (2) im Eckbereich zwischen Breitseiten (5) und Schmalseiten (4) des Querschnittsprofils angeordnet sind und insbesondere genau im Eck liegen und als Ecknuten (35) ausgebildet sind.

8. Sensoreinheit mit einem Sensor-Schutzprofil (1) nach Anspruch 7, **dadurch gekennzeichnet, dass**
im Schutzprofil (1, 1') die Außenkontur (3) des Querschnittes mittensymmetrisch zu beiden Querrichtungen (20, 30) ausgebildet ist.

9. Sensoreinheit mit einem Sensor-Schutzprofil (1) nach einem der vorhergehenden Ansprüche
**dadurch gekennzeichnet, dass**
im Schutzprofil (1, 1') die Außenkontur (3) des Querschnittes des Schutzprofiles (1') mittensymmetrisch nur zu einer Querrichtung (20), insbesondere derjenigen parallel zu den Schmalseiten (4) des Querschnittes ausgebildet ist und auf der Symmetrielinie eine kreisbogenförmige, sich mehr als 180° erstreckende, Aufwölbung (7) mit Hohlraum im Inneren der Aufwölbung, insbesondere dem ersten Hauptraum (11) für den Wellenleiter (21), aufweist.

10. Sensoreinheit mit einem Sensor-Schutzprofil (1) nach einem der vorhergehenden Ansprüche
**dadurch gekennzeichnet, dass**
im Schutzprofil (1, 1') die Außenkontur (3) des Querschnittes in einen Hüllkreis (19) passt und diesen mit nur drei Kontaktpunkten (18 a, b, c) erreicht.

11. Sensoreinheit mit einem Sensor-Schutzprofil (1) nach einem der vorhergehenden Ansprüche
**dadurch gekennzeichnet, dass**
im Schutzprofil (1, 1') die Engstelle (9) zwischen dem ersten und zweiten Hauptraum (11, 12) des Innenraumes unsymmetrisch zur gemeinsamen Mittelebene vom ersten und zweiten Hauptraum (11, 12) angeordnet ist und der erste Hauptraum (11) einen kreisbogenförmigen Innenumfang über mehr als 200°, insbesondere mehr als 250°, insbesondere mehr als 270° umfasst.

12. Sensoreinheit mit einem Sensor-Schutzprofil (1) nach einem der vorhergehenden Ansprüche
**dadurch gekennzeichnet, dass**
im Schutzprofil (1, 1') der zweite Hauptraum (12) für die Aufnahme der Elektronik (22) einander gegenüberliegende Haltenuten (14) in seinem Umfang aufweist zum Einschieben von Elektronikplatinen (23).

## Claims

1. A sensor unit comprising:
a sensor protective profile (1) including a circumferentially closed cross section;
a magnetostrive position sensor received therein;
processing electronics (22) in particular received therein;
two face cover plates (24) on the protective profile (1) that is cut to length, wherein one cover plate includes a cable pass through (25);
a magnet (17) configured to be moved along the protective profile (1) in longitudinal direction (10),
wherein the sensor unit includes clamping arms (27) for mounting the protective profile (1) at an adjacent component through engagement of the clamping arms (27) in transversal direction (20) into the combination (2),
wherein flat gaskets (26) are provided between the cover plates (24) and the faces of the protective profile (1); and
wherein the cover plate (24) is mounted through threaded connections in longitudinal direction into the combination grooves (2) at the protective profile (1)

2. The sensor unit according to claim 1,
wherein the protective profile (1) is received and inserted in a particularly circular protective tube (28) and/or in particular
wherein a slide element including a magnet (17), in particular a standard slide support element (29) is supported on an outside of a circular arc-shaped bulge (7) so that the slide element reaches about the bulge in a form-locking manner.

3. The sensor unit according to one of the claims 1 through 2,
wherein an insulating insulation element (15), in particular made from plastic material, is arranged between the clamping arms (27) and an adjacent component, and an insulation sleeve (16), in particular made from plastic material, is arranged between the clamping arms (27) and the bolt extending through the clamping arms.

4. The sensor unit including a sensor protection profile (1) according to one of the preceding claims,
wherein combination grooves (2) are arranged in the protective profile (1, 1'), where the combination grooves include an undercut outward open cross section on the one hand side for lateral insertion of plate shaped elements and on the other hand side for screwing in self-cutting screws into the undercut circular arc-shaped portion of the cross-section of the combination groove in longitudinal direction (10) from the face-side are arranged in the outer contour (3) of the profile cross-section.

5. The sensor unit including a sensor protective profile (1) according to one of the preceding claims,
wherein an inner contour (13) in the protective profile (1) includes only one first main cavity (11) for the wave conductor (21) of the position sensor and only one second main cavity (12) for the processing electronics (22) which are preferably in connection with one another through a tight spot (9) of the inner contour (13), so that the protective profile (1, 1') in the cross-section in particular includes only one free cavity.

6. The sensor unit including a sensor protective profile (1) according to one of the preceding claims,
wherein the outer contour of the cross-section of the protective profile (1, 1') is at least three times as wide as it is high and in particular one respective combination groove (2), preferably two combination grooves (2) are included only in the narrow sides (4) of the protective profile which are disposed at equal distances from the respectively adjacent broad sides (5) and/or in particular
wherein the protective profile (1) includes a notch (6) along the broad sides (5) at
the outer circumference, in particular at the location of the center of the first free space (11) for the wave conductor (21).

7. The sensor unit including a sensor protective profile (1) according to one of the preceding claims,
wherein the combination grooves (2) in the protective profile (1, 1') are configured in the corner portion between broad sides (5) and narrow sides (4) of the cross-section profile and are in particular arranged precisely in the corner and are configured as corner grooves (35).

8. The sensor unit including a sensor protective profile (1) according to claim 7,
wherein the outer contour (3) of the cross-section is configured mirror-symmetrical to both transversal directions (20, 30) in the protective profile (1, 1')

9. The sensor unit including a sensor protective profile (1) according to one of the preceding claims,
wherein the protective profile (1, 1') is configured with an outer contour (3) of the cross-section that is mirror-symmetrical to only one transversal direction (20), in particular the transversal direction parallel to the narrow sides (4) of the cross-section and a circular arch-shaped bulge (7) with a cavity and extending over more than 180° is configured on the symmetry line in the interior of the bulge, in particular the first main cavity (11) for the wave conductor (21).

10. The sensor unit including a sensor protective profile (1) according to one of the preceding claims,
wherein the outer contour (3) of the cross-section of the protective profile (1, 1') fits into an enveloping circle (19) in the protective profile (1, 1') and contacts the enveloping circle (19) only at three contact points (18a, b, c).

11. The sensor unit including a sensor protective profile (1) according to one of the preceding claims,
wherein a tight spot (9) in the protective profile (1,1') is arranged between the first and the second main cavity (11, 12) of the inner cavity non-symmetrical to a common center plane of the first and second main cavity (11, 12) and the first main cavity (11) includes a circular arc-shaped inner circumference over more than 200°, in particular more than 250°, in particular more than 270°.

12. The sensor unit with a sensor protective profile (1) according to one of the preceding claims,
wherein the second main cavity (12) in the protective profile (1, 1') includes support grooves (14) opposing one another in its circumference for receiving electronics (22), where the support grooves are configured for inserting electronic circuit boards (23).

## Revendications

1. Unité de capteur avec
- un profilé de capteur de protection (1) avec une section transversale fermée circulairement,
- un capteur de position magnetostrictif logé à l'intérieur et
- une électronique d'évaluation (22) logée en particulier à l'intérieur et
- deux couvercles de fermeture (24) en face avant sur le profilé de protection raccourci (1) dont un présente un passage de câble (25),
- un aimant (17) mobile dans le sens longitudinal (10) du profilé de protection (1), et
- l'unité de capteur comprend des mâchoires de serrage (27) pour la fixation du profilé de protection (1) par pénétration des mâchoires de serrage (27) dans la direction transversale (20) dans les rainures combinées (2) et
**caractérisée en ce que**
- des joints plats (26) sont fixés entre les couvercles de fermeture (24) et les faces avant du profilé de protection (1), et
- le couvercle de fermeture (24) est fixé par des vissages dans la direction longitudinale dans les rainures combinées (2) sur le profilé de protection (1).

2. Unité de capteur selon la revendication 1, **caractérisée en ce que**
- le profilé de protection (1) est logé et inséré dans un tube de protection en particulier circulaire (28) de manière appropriée, et/ou en particulier
- sur la face externe du bombement (7) en arc de cercle, un élément de glissement contenant un aimant (17) étant guidé par adhérence de forme en particulier un élément de guidage de glissement standard (29).

3. Unité de capteur selon l'une des revendications 1 à 2, **caractérisée en ce qu'**entre les mâchoires de serrage (27) et le compossant adjacent (15), il est disposé un élément isolant (15) en particulier en matière plastique ainsi qu'entre les mâchoires de serrage (27) et la vis les traversant, il est disposé une douille d'isolation (16) en particulier en matière plastique.

4. Unité de capteur avec un profilé de protection de capteur (1) selon l'une des revendications précédentes, **caractérisée en ce que** dans le profilé de protection(1, 1"), des rainures combinées (2) sont disposées avec une section transversale contre-dépouillée ouverte vers l'extérieur d'une part pour l'insertion latérale d'éléments en forme de plaque et d'autre part pour le vissage de vis autotaraudeuse dans la partie contre-dépouillée en forme d'arc de cercle de la section transversale des rainures combinées dans la direction longitudinale (10) depuis la face frontale dans le contour externe (3) de la section transversale de profilé.

5. Unité de capteur avec un profilé de protection de capteur (1) selon l'une des revendications précédentes, **caractérisée en ce que** dans le profilé de protection (1, 1"), le contour interne (13) ne se compose que d'un premier espace principal (11) pour le guide d'onde (21) du capteur de position et que d'un second espace principal (12) pour l'électronique d'analyse (22), espace qui sont reliés ensemble de préférence par un passage étroit (9) du contour interne (13) de sorte que le profilé de protection (1, 1") ne dispose dans la section transversale en particulier que d'un seul espace libre.

6. Unité de capteur avec un profilé de protection de capteur (1) selon l'une des revendications précédentes, **caractérisée en ce que** dans le profilé de protection (1, 1")
- le contour externe (3) de la section transversale du profilé de protection est au moins trois fois aussi large que haut et en particulier uniquement dans les faces étroites présente une de préférence deux rainures combinées à même distance des faces larges (5) adjacentes et/ou en particulier
- le long des faces larges (5), il existe sur la périphérie externe une encoche (6) en particulier en particulier à l'endroit du milieu du premier espace libre (11) pour le guide d'ondes (21).

7. Unité de capteur avec un profilé de protection de capteur (1) selon l'une des revendications précédentes, **caractérisée en ce que** dans le profilé de protection (1, 1"), les rainures combinées (2) sont disposées dans la zone d'angle entre les faces larges (5) et les faces étroites (4) du profilé transversal et en particulier se trouvent exactement dans l'angle et sont réalisées comme des rainures d'angle (35).

8. Unité de capteur avec un profilé de protection de capteur (1) selon la revendication 7 **caractérisée en ce que** dans le profilé de protection (1, 1"), le contour externe (3) de la section transversale est réalisé symétriquement au milieu par rapport aux deux directions transversales (20, 30).

9. Unité de capteur avec un profilé de protection de capteur (1) selon l'une des revendications précédentes, **caractérisée en ce que** dans le profilé de protection (1, 1"), le contour externe (3) de la section transversale du profilé de protection (1') n'est réalisé symétriquement que dans une direction transversale (20), en particulier celle parallèle aux faces étroites (4) de la coupe transversale et présente sur la ligne de symétrie un bombement (7) en forme d'arc de cercle s'étendant à plus de 180° avec un espace creux à l'intérieur du bombement, en particulier le premier espace principal (11) pour le guide d'ondes (21).

10. Unité de capteur avec un profilé de protection de capteur (1) selon l'une des revendications précédentes, **caractérisée en ce que** le contour externe (3) de la section transversale entre dans un cercle enveloppant (19) et n'atteint celui-ci que par trois points de contact (18a, b, c).

11. Unité de capteur avec un profilé de protection de capteur (1) selon l'une des revendications précédentes, **caractérisée en ce que** dans le profilé de protection (1, 11'), le passage étroit (9) est disposé entre le premier et le second espace principal (11, 12) de l'espace intérieur de manière non symétrique par rapport au plan commun médian, et le premier espace principal (11) comprend une périphérie interne en forme d'arc de cercle de plus de 200°, en particulier de plus de 250°, en particulier de plus de 270°C.

12. Unité de capteur avec un profilé de protection de capteur (1) selon l'une des revendications précédentes, **caractérisée en ce que** dans le profilé de protection (1, 1'), le second espace principal (12) pour le logement de l'électronique (22) présente dans sa périphérie des rainures de retenue (14) opposées pour l'insertion de platines électroniques (23).
